Europäisches Patentamt

**European Patent Office**

Office européen des brevets

(19)

(11) Veröffentlichungsnummer: **0 038 470**
**B1**

(12) # EUROPÄISCHE PATENTSCHRIFT

(45) Veröffentlichungstag der Patentschrift:
14.03.84

(51) Int. Cl.³: **A 01 K 63/04, F 16 L 37/28**

(21) Anmeldenummer: **81102628.5**

(22) Anmeldetag: **08.04.81**

(54) **Steckverbindung für Aquariendruckmittelleitungen.**

(30) Priorität: **16.04.80 DE 3014527**

(43) Veröffentlichungstag der Anmeldung:
**28.10.81 Patentblatt 81/43**

(45) Bekanntmachung des Hinweises auf die Patenterteilung:
**14.03.84 Patentblatt 84/11**

(84) Benannte Vertragsstaaten:
**AT BE CH DE FR GB IT LI LU NL SE**

(56) Entgegenhaltungen:
**DE - A - 32 998**
**DE - A - 1 525 708**
**DE - A - 1 775 965**
**DE - A - 2 064 326**
**DE - A - 2 225 314**
**DE - A - 2 457 473**

(73) Patentinhaber: **Tetra Werke Dr.rer.nat. Ulrich Baensch GmbH, Herrenteich 78, D-4520 Melle 1 (DE)**

(72) Erfinder: **Panthöfer, Rudolf, Menden, Keplerstrasse 24, D-5205 St. Augustin 3 (DE)**

(74) Vertreter: **Depmeyer, Lothar, Auf der Höchte 30, D-3008 Garbsen 1 (DE)**

Steckverbindung für Aquariendruckmittelleitungen

Die Erfindung betrifft eine Steckverbindung für Aquariendruckmittelleitungen, insbesondere in Verbindung mit Aquarienfiltereinrichtungen, mit einem Stecker und einer diesen aufnehmenden Muffe, wobei sowohl der Stecker als auch die Muffe mit einem die Leitung absperrenden Ventilteller versehen sind, der gegen die Wirkung einer Feder von seinem Sitz abhebbar ist und deren axial verschiebbare Schäfte beim Zusammenstecken des Steckers und der Muffe zum gegenseitigen Anschlag kommen, wobei die Gehäuse des Steckers und der Muffe derart zusammenführbar sind, daß sie zwischen den beiden Ventiltellern eine druckdichte Leitung bilden.

Steckverbindungen für Druckmittelleitungen dieser Ausbildung sind bekannt (DE-C-32 998); bekannt sind weiterhin schlechthin Steckverbindungen für Wasser enthaltende Aquarienleitungen (DE-A-2 457 473).

Bei den bekannten Steckverbindungen für Druckmittelleitungen weist der Ventilteller auf seiner dem Schaft gegenüberliegenden hinteren Seite eine Stange auf, die von einer Druckfeder umschlossen und in einem in der Druckmittelleitung befindlichen Quersteg geführt ist, der eine nur geringe Breite und damit nur eine kurze Führungsfläche aufweist. Darüber hinaus befinden sich diese Führungsmittel in größerem Abstand von Ventilteller und den Dichtungsflächen. Damit besteht die Gefahr der Verkantung und eines unzureichenden Ventilschlusses.

Demgegenüber liegt der Erfindung die Aufgabe zugrunde, die Führung des Ventiltellers zu verbessern und Verkantungen sowie Mängel beim Ventilschluß auch dann auszuschließen, wenn Stecker und Muffe beim Herstellen und beim Lösen der Steckverbindung sich nicht in konzentrischer Lage befinden.

Zur Lösung dieser Aufgabe haben erfindungsgemäß der Ventilteller und sein Schaft eine zentrale Bohrung, die auch den Ventilteller durchdringt, wobei in die Bohrung ein am Gehäuse gelagerter Zapfen in der Weise eingreift, daß der Ventilteller und der Schaft längsgeführt sind, und zudem umschließt die Ventilfeder den Zapfen.

Demgemäß erfolgt die Führung des Ventiltellers und seines Schaftes durch einen Zapfen, der eine lange Führungsfläche hat und nicht nur den Ventilteller, sondern auch seinen frei nach vorne gerichteten Schaft durchsetzt und in gehöriger Weise zu führen imstande ist. Demgemäß können beim Zusammenführen und Lösen von Stecker und Muffe auf die Schäfte einwirkende Schrägkräfte nicht zu Verklemmungen und Verkantungen des Ventiltellers führen, vielmehr ist auch unter diesen Bedingungen ein ordnungsgemäßes Öffnen und Schließen der beiden Ventile sichergestellt.

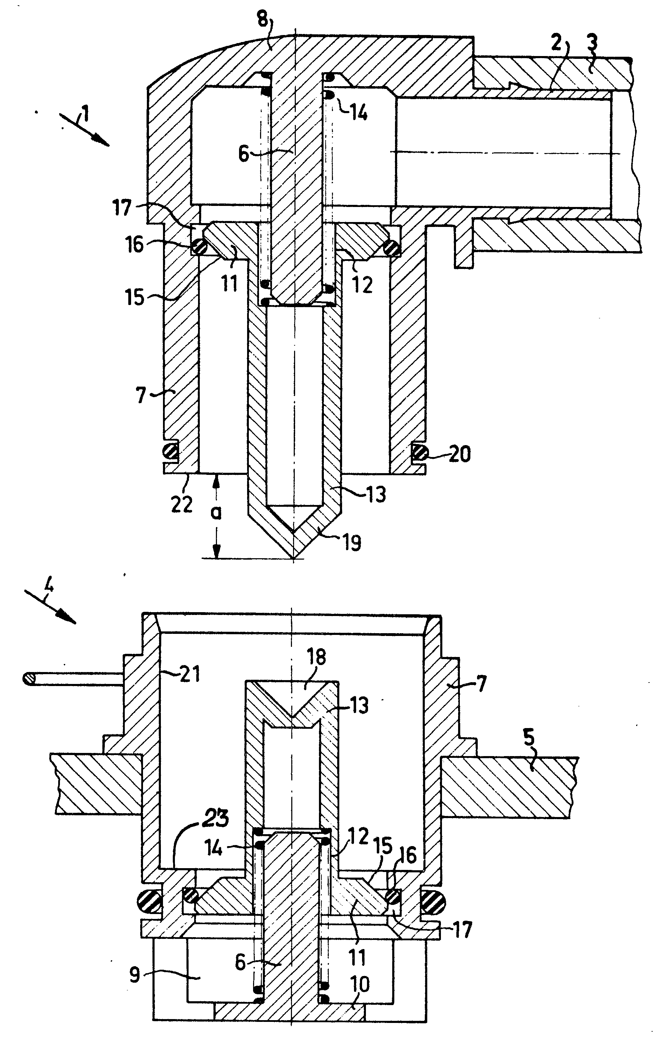

Ein Ausführungsbeispiel der Erfindung ist in der Zeichnung dargestellt.

Die Abbildung zeigt einen senkrechten Schnitt durch einen Winkelstecker und eine zugehörige Muffe, und zwar übereinanderliegend in fluchtender Stellung.

Der oben dargestellte Winkelstecker 1 hat an seinem hinteren oberen Teil eine waagerecht abstehende Tülle 2 zur Aufnahme eines Schlauches 3, der zu einer innerhalb des Aquariums befindlichen Druckpumpe führt.

Die Muffe 4 ist hingegen in eine Wandung 5 eines druckfesten Filtergehäuses eingesetzt.

Die Muffe 4 und der Stecker 1 haben nach unten bzw. nach oben gerichtete Zapfen 6, die koaxial zu den beiden vorne im wesentlichen rohrförmigen Gehäusen 7 angeordnet sind. Der Zapfen 6 des Steckers 1 ist dabei an der oberen Querwand 8 des Gehäuses 7 befestigt. Der Zapfen 6 der Muffe 4 ist an einem Käfig 9 gelagert, der aus Armen 10 zum Durchtritt des Wassers gebildet ist.

An den Zapfen 6 sind die dem Stecker 1 und der Muffe 4 zugeordneten Ventilteller 11 mit Bohrung 12 und die zugehörigen hohl gehaltenen Schäfte 13 längsgeführt.

Die auf den Zapfen 6 befindlichen Druckfedern 14 wirken auf die Ventilteller 11 in der Weise ein, daß sie mit ihrer schrägen Sitzfläche 15 gegen einen Dichtungsring 16 angepreßt werden, der sich in einer Ringnut 17 des Gehäuses 7 befindet. Die Druckfedern 14 sorgen also für den Ventilschluß. Der Durchgang für das Wasser ist also nicht möglich, wenn Muffe 4 und Stecker 1 getrennt sind.

Der Schaft 13 des Steckers 1 ist an seinem freien Ende kegelig gehalten; das freie Ende des Schaftes 13 der Muffe 4 hat eine entsprechende kegelige Ausnehmung 18. Darüber hinaus springt das freie Ende des Schaftes 13 des Steckers 1 gegenüber dem Gehäuse 7 vor, und zwar um ein Maß a. Die Länge des Schaftes 13 der Muffe 4 ist dabei so bemessen, daß beim Zusammenführen des Steckers 1 und der Muffe 4 die kegelige Spitze 19 des Schaftes 13 ganzflächig in der Ausnehmung 18 zur Anlage kommt, nachdem bereits die außen am freien Gehäuseende befindliche Dichtung 20 des Steckers 1 an der Innenfläche 21 der Muffe 4 zur Anlage gekommen ist. Erst nachdem dieser Dichtungsschluß zustande gekommen ist, verschieben sich beim weiteren Zusammenstecken der Muffe 4 und des Steckers 1 die Schäfte 13 gegen die Federkraft. Das damit stattfindende Abheben der Ventilteller 11 und Öffnen der Ventile geschieht also erst nach Bildung eines druckdichten Durchganges durch die einander zugekehrten rohrförmigen Teile des Gehäuses 7. Im zusammengesteckten Zustand liegt dann die Stirnfläche 22 des Steckers 1 auf dem Absatz 23 der Muffe 4 auf.

Zum Lösen der Verbindung z. B. zum Zwecke der Reinigung des Filters wird der Stecker 1 gezogen. Dabei schließen die Ventile unter der Federkraft. Dies geschieht wiederum vor einer Trennung der beiden Teile 1, 4.

## Patentanspruch

Steckverbindung für Aquariendruckmittelleitungen, insbesondere in Verbindung mit Aquarienfiltereinrichtungen, mit einem Stecker (1) und einer diesen aufnehmenden Muffe (4), wobei sowohl der Stecker (1) als auch die Muffe (4) mit einem die Leitung absperrenden Ventilteller (11) versehen sind, der gegen die Wirkung einer Feder (14) von seinem Sitz abhebbar ist und deren axial verschiebbare Schäfte (13) beim Zusammenstecken des Steckers (1) und der Muffe (4) zum gegenseitigen Anschlag kommen, wobei die Gehäuse (7) des Steckers (1) und der Muffe (4) derart zusammenführbar sind, daß sie zwischen den beiden Ventiltellern (11) eine druckdichte Leitung bilden, dadurch gekennzeichnet, daß der Ventilteller und sein Schaft (13) eine zentrale Bohrung (12) haben, die auch den Ventilteller (11) durchdringt, wobei in die Bohrung (12) ein am Gehäuse (7) gelagerter Zapfen (6) in der Weise eingreift, daß der Ventilteller (11) und der Schaft (13) längsgeführt sind und daß die Ventilfeder (14) den Zapfen (6) umschließt.

## Claim

Plug connection for pressure medium lines for aquaria, more especially in association with aquarium filtering devices, having a plug (1) and a socket (4) which accommodates said plug, whereby both the plug (1) and the socket (4) are provided with a valve plate (11) which shuts off the line and can be raised from its seat in opposition tō the action of a spring (14), and whereby the axially displaceable shafts (13) of the plug connection meet at the mutual stop position when the plug (1) and the socket (4) are assembled, whereby the housings (7) of the plug (1) and the socket (4) can be brought together in such manner that they form a pressure-tight line between the two valve plates (11), characterised in that the valve plate und its shaft (13) have a central bore (12) which also extends through the valve plate (11), whereby a pin (6), which is mounted on the housing (7), engages in the bore (12) in such a manner that the valve plate (11) and the shaft (13) are longitudinally guided and the valve spring (14) surrounds the pin (6).

## Revendication

Raccord par enfichage pour des conduits de milieu sous pression pour des aquariums, en liaison notamment avec des dispositifs de filtration pour des aquariums, comprenant une pièce mâle (1) et une pièce femelle (4) de réception de celleci, la pièce mâle (1) ainsi que la pièce femelle (4) étant munies d'un clapet de soupape (11) qui obture le conduit, qui peut être soulevé de son siège et dont les tiges (13), qui peuvent coulisser axialement, viennent mutuellement en butée lors de l'enfichage de la pièce mâle (1) et de la pièce femelle (4), les boîtiers (7) de la pièce mâle (1) et de la pièce femelle (4) pouvant être enfichés de manière à former entre les deux clapets de soupape (11) un conduit tenant la pression, caractérisé en ce que le clapet et sa tige (13) ont un perçage central (12) qui traverse aussi le clapet de soupape (11), une cheville (6), montée sur le boîtier (7), pénétrant dans le perçage (12) de manière que le clapet de soupape (11) et la tige (13) soient guidés longitudinalement et que le ressort de soupape (14) entoure la cheville (6).